# EUROPEAN PATENT APPLICATION

(11) **EP 3 425 494 A1**
(43) Date of publication of application: **09.01.2019**
(21) Application number: 18180067.3
(22) Date of filing: 27.06.2018
(51) Int. Cl.: G06F 3/12

(54) **PRINTER APPARATUS AND PROGRAM**

(30) Priority: 03.07.2017 JP 2017130535
(71) Applicant: Toshiba TEC Kabushiki Kaisha, Tokyo 141-8562 (JP)
(72) Inventor: MATSUDA, Okiharu, Shinagawa-ku, Tokyo 141-8562 (JP)
(74) Representative: Takeuchi, Maya

(57) **Abstract**

A printer apparatus configured for communication with an external apparatus, includes a storage device including a first storage region in which a control program for controlling the printer apparatus is stored, a second storage region in which parameters related to the control program are stored, and a third storage region in which a flag that specifies one of a plurality of methods for updating values of the parameters is stored, a communication interface through which a new program that is an update of the control program is received from the external apparatus, and a processor configured to update the control program stored in the first storage region with the new program and to update the values of the parameter stored in the second storage region according to one of the plurality of method specified by the flag.

## Description

### FIELD

Embodiments described herein relate generally to a printer apparatus, a method of updating a control program for the printer apparatus and a non-transitory computer readable program causing a processor of the printer apparatus to carry out the method.

### BACKGROUND

Retailers engaged in retail selling of products and other various businesses use printer apparatuses, such as receipt printers for data output and MFPs (Multifunction Peripherals) . In such a printer apparatus, a program controls operations (functions) of the printer apparatus by causing a processor to execute a control program such as firmware. This control program is normally updated either as needed or at regular intervals to add functions, security measures, and the like.

There exists a system capable of updating a control program in a plurality of printer apparatuses at one time by distributing a program for update (hereinafter, referred to as "update program") from a central server to the plurality of printer apparatuses. In addition, there has been proposed a technique for updating values of parameters for functional units controlled by the control program in conjunction with a new control program.

While it is possible to update the plurality of printer apparatuses at one time using the techniques described above, it is difficult to change the method for updating the parameters on a per printer apparatus basis. For example, in the retailers or businesses, one printer apparatus may need to be updated with the parameters set to default values in conjunction with the update of the control program and another printer apparatus may need to retain the existing parameter values . In such cases, with the techniques of the related art, parameters need to updated on a per printer apparatus basis or the printer apparatuses need to be separated into update groups, resulting in lack of convenience.

### SUMMARY OF INVENTION

To solve the above-cited problems, there is provided a printer apparatus configured for communication with an external apparatus, comprising:
a storage device including a first storage region in which a control program for controlling the printer apparatus is stored, a second storage region in which parameters related to the control program are stored, and a third storage region in which a flag that specifies one of a plurality of methods for updating values of the parameters is stored;
a communication interface through which a new program that is an update of the control program is received from the external apparatus; and
a processor configured to update the control program stored in the first storage region with the new program and to update the values of the parameter stored in the second storage region according to one of the plurality of method specified by the flag.

Preferably the processor may update the values of the parameter stored in the second storage region to default values if the flag has a first value.

Preferably the processor may maintain the values of the parameter stored in the second storage region if the flag has a second value.

Preferably the processor may update the values of the parameter stored in the second storage region to custom values if the flag has a third value.

Preferably the processor may set a value of a new parameter that is required by the new control program to a default value.

Preferably the storage device may further include a fourth region in which back-up copies of the parameters are stored.

Preferably the back-up copies of the parameters may be stored in a compressed format.

In another exemplary embodiment there is also provided a method of updating a control program for a printer apparatus, said method comprising:
loading a new control program into a first region of a volatile memory, which is different from a second region of the volatile memory into which the control program for the printer apparatus is loaded from a first region of a non-volatile storage device upon booting;
storing the new control program loaded into the first region of the volatile memory, in the first region of the non-volatile storage device;
updating values of parameters stored in a second region of the non-volatile storage device according to a flag that specifies one of a plurality of methods for updating the values of the parameters and is stored in a third region of the non-volatile storage device; and
upon subsequent booting, loading the new control program stored in the first region of the non-volatile memory into the second region of the volatile memory.

Preferably the values of the parameter stored in the second storage region may be updated to default values if the flag has a first value.

Preferably the values of the parameter stored in the second storage region may be maintained if the flag has a second value.

Preferably the values of the parameter stored in the second storage region may be updated to custom values if the flag has a third value.

Preferably a value of a new parameter that is required by the new control program may be set to a default value.

Preferably the method may further comprise:
backing up the parameters to a fourth region of the non-volatile storage device prior to updating the values of parameters stored in the second region of the non-volatile storage device.

Preferably back-up copies of the parameters may be stored in a compressed format.

In yet another exemplary embodiment there is also provided a non-transitory computer readable program causing a processor of a printer apparatus to carry out the method according to any one of the preceding embodiments.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 shows an example of a configuration of a program update system according to an embodiment.
Fig. 2 shows an example of a hardware configuration of a printer apparatus according to the embodiment.
Fig. 3 is a diagram illustrating different storage regions of the storage unit shown in Fig. 2.
Fig. 4 is a diagram illustrating the arrangement of a setting region shown in Fig. 3.
Fig. 5 shows an example of a functional configuration of the printer apparatus according to the embodiment.
Fig. 6 is a flowchart showing an example of processes executed by the printer apparatus according to the embodiment.
Figs. 7A to 7D are diagrams of states of a RAM and the storage unit before and after update of the printer apparatus according to the embodiment.

### DETAILED DESCRIPTION

Embodiments provide a printer apparatus and a program capable of efficiently updating a control program and parameters stored in the printer apparatus.

In general, according to one embodiment, a printer apparatus configured for communication with an external apparatus includes a storage device including a first storage region in which a control program for controlling the printer apparatus is stored, a second storage region in which parameters related to the control program are stored, and a third storage region in which a flag that specifies one of a plurality of methods for updating values of the parameters is stored, a communication interface through which a new program that is an update of the control program is received from the external apparatus, and a processor configured to update the control program stored in the first storage region with the new program and to update the values of the parameter stored in the second storage region according to one of the plurality of method specified by the flag.

A printer apparatus and a program according to an embodiment will be described hereinafter with reference to the drawings.

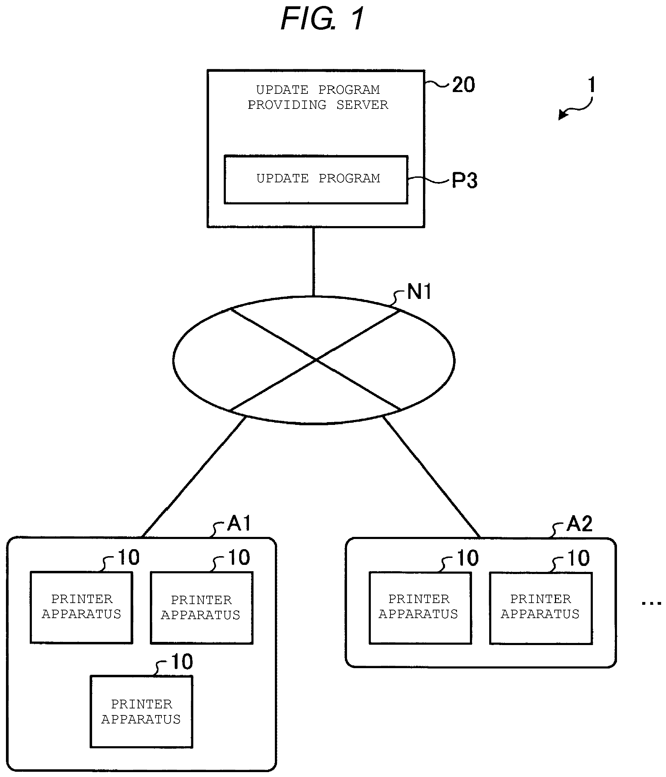

Fig. 1 shows an example of a configuration of a program update system according to the present embodiment. As shown in Fig. 1, a program update system 1 includes a group of printer apparatuses 10 and an update program providing server 20. The printer apparatus 10 and the update program providing server 20 are connected to each other via a network N1. The network N1 is a LAN (Local Area Network), the Internet, a leased line, or the like.

The printer apparatus 10 is, for example, a receipt printer or an MFP. One or a plurality of printer apparatuses 10 are provided in each retailer (shop) or business place. Fig. 1 shows an example in which three printer apparatuses 10 are provided in a shop A1 and two printer apparatuses 10 are provided in a shop A2. The number of the printer apparatuses 10 connected to the network N1 and the number of shops (business places) is not limited to those shown in Fig. 1.

The update program providing server 20 is provided in, for example, a company that manufactures or sells the printer apparatuses 10 or in a company responsible for management of the printer apparatuses 10. The update program providing server 20 provides an update program P3 for updating a control program P1, to be described later, to the printer apparatuses 10 via the network N1. While the update program providing server 20 is described as one server apparatus in the present embodiment, the update program providing server 20 is not limited thereto, and may be a plurality of server apparatuses, e.g., a cloud server.

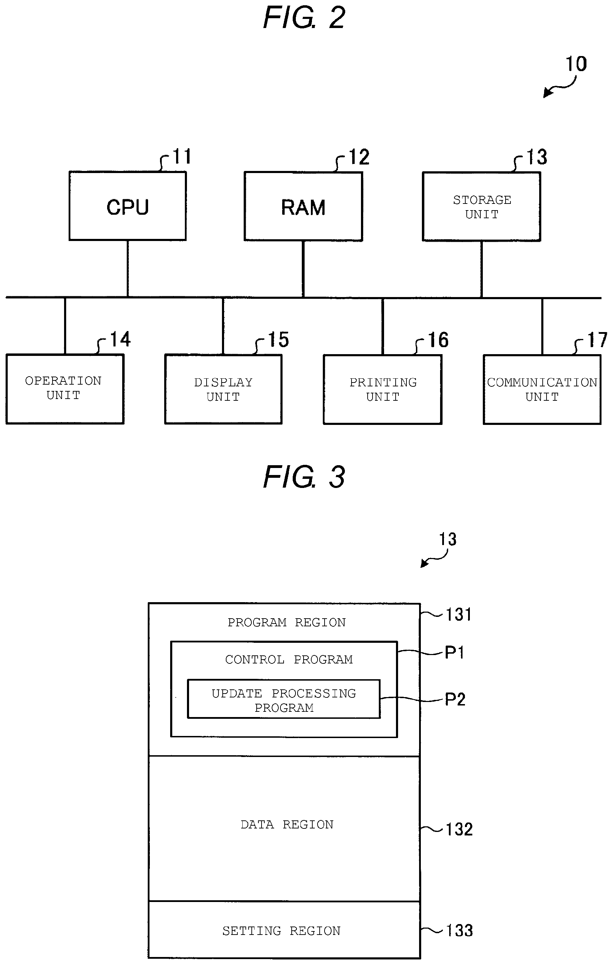

Fig. 2 shows an example of a hardware configuration of the printer apparatus 10. As shown in Fig. 2, the printer apparatus 10 includes a CPU 11, a RAM (Random Access Memory) 12, a storage unit 13, an operation unit 14, a display unit 15, a printing unit 16, and a communication unit 17.

The CPU 11 controls the printer apparatus 10 by executing the control program P1 to be described later. The RAM 12 is a volatile storage medium and used as a work space for the CPU 11. The RAM 12 is also used as a region for holding the update program P3 provided from the update program providing server 20.

The storage unit 13 is a readable/writable nonvolatile storage medium such as a flash memory, an HDD (Hard Disk Drive), or an SSD (Solid State Drive). The storage unit 13 stores programs that can be executed by the CPU 11, parameters, and the like.

Fig. 3 is a diagram illustrating different storage regions of the storage unit 13. As shown in Fig. 3, the storage unit 13 has a program region 131, a data region 132, and a setting region 133.

The program region 131 is a storage region for storing the control program P1. The control program P1 is a program such as firmware or an operating system for controlling the operations of the printer apparatus 10. Furthermore, the control program P1 includes an update processing program P2 for updating the control program P1 itself.

The data region 132 is a storage region for storing various pieces of data. The data region 132 stores, for example, contents such as images and layouts to be output to the display unit 15.

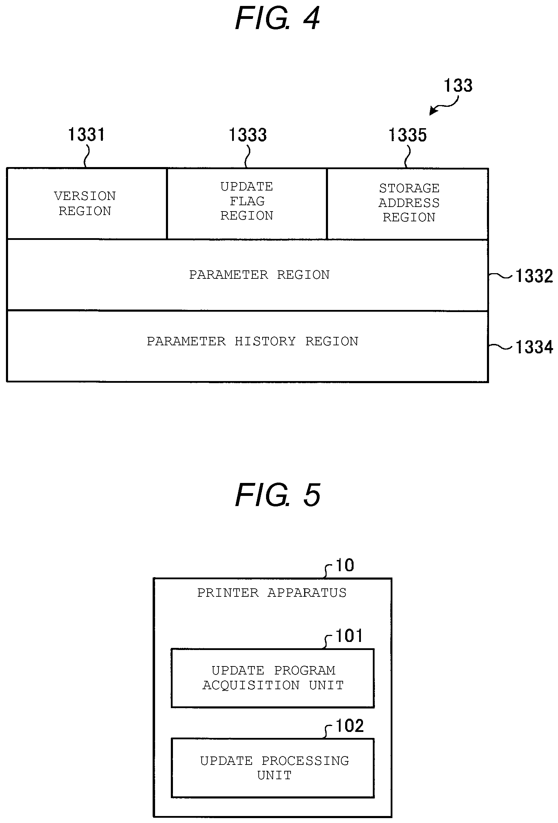

The setting region 133 is a storage region for storing the parameters related to an operation performed by the printer apparatus 10. Fig. 4 is a diagram illustrating the arrangement of the setting region 133. As shown in Fig. 4, the setting region 133 has a version region 1331, a parameter region 1332, an update flag region 1333, a parameter history region 1334, a storage address region 1335.

The version region 1331 is a storage region for storing the version number of the control program P1. Specifically, the version number of the control program P1 stored in the program region 131 is stored in the version region 1331.

The parameter region 1332 is a storage region for storing the values of various parameters related to the operation performed by the printer apparatus 10. The parameters include, for example, those related to a printing function, a communication function, a display function, and the like of the printer apparatus 10. The parameter values in the parameter region 1332 can be changed via the operation unit 14 or the like.

The update flag region 1333 is a storage region for storing an update flag. The update flag is information that is used to selectively instruct any one of a plurality of update methods related to parameter update for the printing apparatus 10. The update flag is expressed as, for example, a two-bit number, and can be set or changed via the operation unit 14 or the update program providing server 20.

In the present embodiment, three states "00", "01", and "02" can be selected as the update flag. The update flag "00" is used to instruct the printer apparatus 10 to return values of parameters to their default values. Further, the update flag "01" is used to instruct the printer apparatus 10 to maintain the values of the parameters at the current values. Furthermore, the update flag "02" is used to instruct the printer apparatus 10 to update the values of the parameters to a customized set of values. The customized set of values associates each of the parameters to a particular value customized for that parameter, and may be stored in the data region 132, the parameter history region 1334, or the like, or may be provided, together with the update program P3, from the update program providing server 20.

The parameter history region 1334 is a storage region for storing a back-up copy of the parameters. As described later, the printer apparatus 10 performs a backup process for the parameters stored in the parameter region 1332 at a time of updating the control program P1. The back-up copy is stored in the parameter history region 1334 as a parameter history.

The storage address region 1335 is a storage region for storing a start address of the parameter history region 1334. The CPU 11 of the printer apparatus 10 writes or reads the parameter history to or from the parameter history region 1334 on the basis of the address stored in the storage address region 1335.

Referring back to Fig. 2, the operation unit 14 is an input device, such as various kinds of switches, buttons, or a pointing device for allowing a user to perform various input operations. The display unit 15 is a display device such as a liquid crystal display, and displays various pieces of information related to the operation performed by the printer apparatus 10 under control of the CPU 11. It is noted that the operation unit 14 may be configured integrally with the display unit 15 as a touch screen.

The printing unit 16 includes a printer engine and a sheet feed mechanism. A printing method of the printing unit 16 is not limited to a specific method, and may be a thermal transfer method, a thermal method, an electrophotographic method, an inkjet method, or the like. The printing unit 16 operates under the control of the CPU 11.

The communication unit 17 is a communication interface for connection to the network N1. The communication unit 17 transmits and receives various pieces of data to and from the update program providing server 20 connected to the network N1.

Next, a functional configuration of the printer apparatus 10 related to the update of the control program P1 will be described. Fig. 5 shows an example of a functional configuration of the printer apparatus 10. The CPU 11 of the printer apparatus 10 loads the update processing program P2 into the RAM 12 and executes the update processing program P2.

The update program acquisition unit 101 acquires the update program P3 provided from the update program providing server 20 by cooperating with the communication unit 17. In addition, the update program acquisition unit 101 loads the acquired update program P3 into the RAM 12.

The update program P3 provided from the update program providing server 20 includes a control program (hereinafter, "new control program P1'") that can replace the control program P1 stored in the storage unit 13. Furthermore, the update program P3 includes information that indicates a version of the new control program P1' and default values for each parameter corresponding to the new control program P1'. The update program P3 may also include customized set of values of the parameters.

A method of acquiring the update program P3 is not limited to a specific method. For example, the update program acquisition unit 101 may acquire the update program P3 either as needed or at regular intervals. Alternatively, the update program acquisition unit 101 may acquire the update program P3 by transmitting a request to the update program providing server 20.

The update processing unit 102 executes an update process for updating the control program P1 stored in the storage unit 13 on the basis of the update program P3 loaded into the RAM 12. Specifically, the update processing unit 102 updates the control program P1 by erasing the control program P1 stored in the program region 131 of the storage unit 13 and writing the update program P3 (new control program P1') to the program region 131. The term "update" in this invention should be understood as a concept that contains not only upgrading of the control program P1 but also downgrading of the control program P1 and reinstallation of the control program P1 of the same version.

Moreover, the update processing unit 102 backs up the current parameters stored in the parameter region 1332, in the parameter history region 1334 as the parameter history as the control program P1 is updated.

The update processing unit 102 may back up the parameters in a well-known compression format, as the parameter history. It is thereby possible to reduce the data capacity required to back up the parameters. Furthermore, the update processing unit 102 may include additional information other than the parameters in the parameter history. An example of the additional information may be the version of the control program P1 related to the current parameters. The parameter history stored in the parameter history region 1334 can be used when, for example, the new control program P1' is returned to the control program P1.

While the number of parameter histories stored in the parameter history region 1334 is not limited to a specific number, a log rotation method may be used to prevent an unlimited growth of the number of parameter histories. According to the log rotation method, the update processing unit 102 loads a predetermined number (for example, 30) of the latest parameter histories into the RAM 12 when the number of stored parameter histories reaches an upper limit value (for example, 40). The update processing unit 102 then performs a process for initializing the parameter history region 1334 and then returning the parameter histories loaded into the RAM 12 to the parameter history region 1334.

Once the parameter backup has been completed, the update processing unit 102 updates the parameters in the parameter region 1332 on the basis of the flag value in the update flag region 1333.

If the update flag is, for example, "00", the update processing unit 102 updates the value of each parameter stored in the parameter region 1332 to a default value on the basis of the default values included in the update program P3. Furthermore, if the update flag is, for example, "01", the update processing unit 102 maintains the value of each parameter stored in the parameter region 1332. Moreover, if the update flag is, for example, "02", the update processing unit 102 updates the value of each parameter stored in the parameter region 1332 on the basis of the customized set of values for the parameters.

If a new parameter is added as the control program P1 is updated, the update processing unit 102 sets the value of the new parameter to a default value (or custom value) and adds the value to the parameter region 1332. Furthermore, if an existing parameter is deleted as the control program P1 is updated, the update processing unit 102 may either delete that parameter from the parameter region 1332 or maintain that parameter in the parameter region 1332 without deletion.

Further, when the update of the control program P1 and the parameters is completed, the update processing unit 102 reboots the printer apparatus 10 to make the update take effect.

It is noted that the timing at which the update processing unit 102 starts the update process is not limited to specific timing and can be set to any of various types of timing. For example, the update processing unit 102 may start the update process on condition of receiving an instruction to start the update process via the operation unit 14. Alternatively, the update processing unit 102 may start the update process on condition of receiving a command to start the update process from the update program providing server 20 via the communication unit 17. As another alternative, the update processing unit 102 may start the update process on condition of the update program acquisition unit 101 acquiring the update program P3.

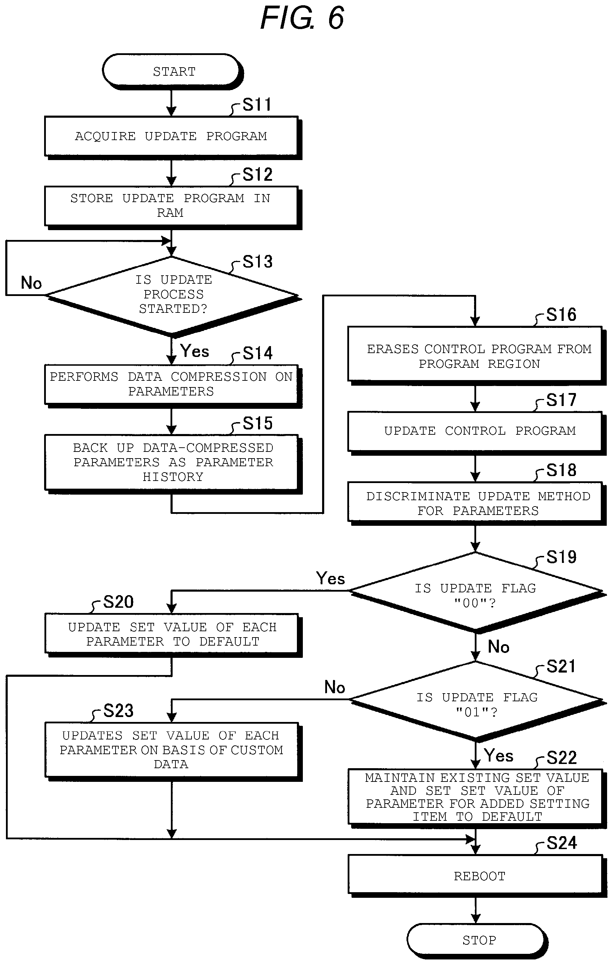

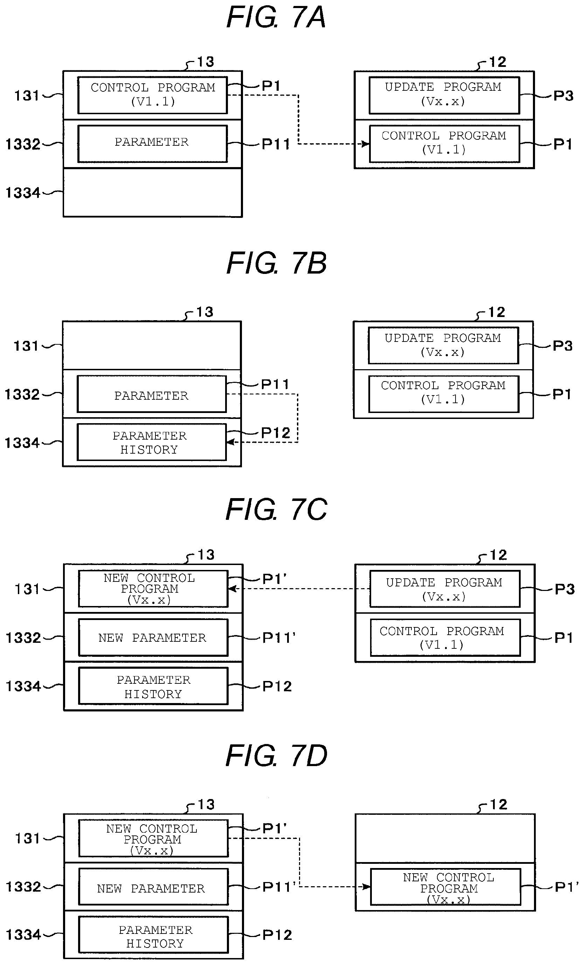

The update process for the control program P1 will be described below with reference to Figs. 6 to 7D. Here, Fig. 6 is a flowchart showing an example of processes performed by the printer apparatus 10. In addition, Figs. 7A to 7D are diagrams of states of the RAM 12 and the storage unit 13 before and after the update.

First, when acquiring the update program P3 from the update program providing server 20 (Step S11), the update program acquisition unit 101 loads the acquired update program P3 into the RAM 12 as shown in Fig. 7A (Step S12).

Fig. 7A shows a state of the RAM 12 and the storage unit 13 right after the update program P3 is loaded into the RAM 12. As shown in Fig. 7A, the update program P3 acquired by the update program acquisition unit 101 is loaded into the RAM 12. In addition, the control program P1 stored in the program region 131 of the storage unit 13 is loaded into the RAM 12. The CPU 1 carries out the functions of the update program acquisition unit 101 and the update processing unit 102 described above by executing the control program P1 on the RAM 12. Alternatively, the printer apparatus 10 may be configured such that the parameters stored in the parameter region 1332 are also loaded into the RAM 12.

Figs. 7A to 7D show that the version of the control program P1 stored in the program region 131 is "V1.1" and the version of the update program P3 is "Vx.x". Furthermore, it is shown that the parameter region 1332 stores parameters P11. That is, the printer apparatus 10 operates on the basis of the control program P1 and the parameters P11.

Referring back to Fig. 6, the update processing unit 102 waits until receiving an instruction to start the update process from the operation unit 14 or the communication unit 17 (Step S13; No). When receiving the update start instruction (Step S13; Yes), the update processing unit 102 starts the update process and proceeds to Step S14. When the update program P3 is not loaded into the RAM 12, the update processing unit 102 is controlled such that the update processing unit 102 does not start the update process.

The update processing unit 102 performs data compression on the parameters P11 (Step S14). Next, the update processing unit 102 backs up the compressed data P11 into the parameter history region 1334 as a parameter history (Step S15). As shown in Fig. 7B, the current parameters P11 are thereby stored in the parameter history region 1334 as a parameter history P12.

Next, the update processing unit 102 erases the control program P1 stored in the program region 131 of the storage unit 13 by initializing the program region 131 (Step S16). As shown in Fig. 7B, the program region 131 of the storage unit 13 thereby becomes empty.

Next, the update processing unit 102 updates the control program P1 by writing the update program P3 loaded into the RAM 12 in the program region 131 of the storage unit 13 (Step S17). As shown in Fig. 7C, the new control program P1' of the version "Vx.x" is thereby stored in the program region 131 of the storage unit 13. The update processing unit 102 also sets the version "Vx.x" of the new control program P1' in the version region 1331 of the setting region 133 as the control program P1 is updated.

Next, the update processing unit 102 determines the update method for the parameters P11 stored in the parameter region 1332 on the basis of the flag value in the update flag region 1333 (Step S18).

Here, if the flag value is "00" (Step S19; Yes), the update processing unit 102 updates the values of each parameter stored in the parameter region 1332 to the default value (Step S20) and proceeds to Step S24. If the flag value is "01" (Step S19; No → Step S21; Yes), the update processing unit 102 maintains the value of each parameter stored in the parameter region 1332 as it is, and also sets also the set the value of any new parameter to the default value (Step S22), and proceeds to Step S24. If the flag vale is "02" (Step S19; No → Step S21; No), the update processing unit 102 updates the value of each parameter stored in the parameter region 1332 on the basis of predetermined customized value (Step S23), and proceeds to Step S24. The parameters P11 stored in the parameter region 1332 are thereby updated to new parameters P11' shown in Fig. 7C.

The update processing unit 102 reboots the printer apparatus 10 to make the updated control program P1 and the updated parameters P11 take effect (Step S24), and ends the process depicted in Fig. 6.

Fig. 7D shows a state of the RAM 12 and the storage unit 13 after reboot. As shown in Fig. 7D, the new control program P1' of the version "Vx.x" is stored in the program region 131 of the storage unit 13. Furthermore, the new control program P1' of the version "Vx.x" stored in the program region 131 of the storage unit 13 is loaded into the RAM 12. That is, after being rebooted in Step S24, the printer apparatus 10 operates on the basis of the new control program P1' and the new parameters P11'.

As described so far, the printer apparatus 10 of the present embodiment updates the parameters stored in the parameter region 1332 by the update method in accordance with the flag value in the update flag region 1333 as the control program P1 stored in the program region 131 is updated. Each of the printer apparatuses 10 can thereby update the parameters according to an update method that is appropriate thereto by setting the flag value in the update flag region 1333. Therefore, an efficient update of the control program P1 and the parameters can be achieved.

Moreover, in the program update system 1 of the present embodiment, even if the printer apparatus 10 that updates the values of the parameters to default values and the printer apparatus 10 that maintains the existing values of the parameters, are both present in the same shop, the update program P3 provided from the update program providing server 20 can be distributed in common to the both printer apparatuses 10. Therefore, it is possible to update the control programs P1 installed in the plurality of printer apparatuses 10 at one time, and also update the parameters according to the update method that is appropriate for the respective printer apparatus 10. Thus, it is possible to efficiently update the control programs P1 and the parameters.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

For example, in the above embodiment, each printer apparatus 10 is configured such that the program region 131, the parameter region 1332, and the update flag region 1333 are implemented in the same storage unit 13. However, the present disclosure is not limited to this configuration and the printer apparatus 10 may be configured such that the regions 131, 1332, 1333, are implemented in different nonvolatile readable/writable storage media in a decentralized manner.

Moreover, while the update processing program P2 is part of the control program P1 in the above embodiment, the present disclosure is not limited thereto, and the update processing program P2 may be independent of the control program P1. In this case, the update processing program P2 is assumed to be stored in a storage region different from the program region 131.

Furthermore, while three update methods are shown by way of example in the above embodiment, the update methods are not limited to those described above. For example, a method of adding or deleting a parameter can be instructed by the update flag. Specifically, as a method of deleting a parameter as the update is performed, the update flag can be used to instruct the deletion of the parameter.

Furthermore, while the processing of updating the control program P1 after the parameters are backed up is described in the above embodiment (see Fig. 6), the printer apparatus 10 may be configured to back up the parameters after updating the control program P1.

Moreover, while the printer apparatus 10 is configured to back up the parameters in the parameter history region 1334 as the parameter history in the above embodiment, the backed-up parameter values may be used as the customized parameter values . Specifically, the update processing unit 102 identifies the parameter history to be used as the customized parameter values for the version of the updated control program P1 (new control program P1') from the parameter history region 1334 when the flag value of the update flag is "02". The update processing unit 102 updates the parameters in the parameter region 1332 on the basis of the values for each parameter included in the identified parameter history. When the parameter values are stored in a compressed state, the update processing unit 102 decompresses the data before updating the parameters in the parameter region 1332.

Moreover, while the program executed by each apparatus of the above embodiment is stored in a built-in storage medium (ROM or HDD), the program may be stored in a different type of computer-readable recording medium such as a CD-ROM, a flexible disk (FD), a CD-R, or a DVD (Digital Versatile Disk) as a file in an installable form or an executable form. Furthermore, the program executed by each apparatus of the above embodiment may be retrieved over a LAN, the Internet, or the like.

## Claims

1. A printer apparatus configured for communication with an external apparatus, comprising:
a storage device including a first storage region in which a control program for controlling the printer apparatus is stored, a second storage region in which parameters related to the control program are stored, and a third storage region in which a flag that specifies one of a plurality of methods for updating values of the parameters is stored;
a communication interface through which a new program that is an update of the control program is received from the external apparatus; and
a processor configured to update the control program stored in the first storage region with the new program and to update the values of the parameter stored in the second storage region according to one of the plurality of method specified by the flag.

2. The printer apparatus according to claim 1, wherein the processor updates the values of the parameter stored in the second storage region to default values if the flag has a first value.

3. The printer apparatus according to any one of claims 1 or 2, wherein the processor maintains the values of the parameter stored in the second storage region if the flag has a second value.

4. The printer apparatus according to any one of claims 1 to 3, wherein the processor updates the values of the parameter stored in the second storage region to custom values if the flag has a third value.

5. The printer apparatus according to any one of claims 1 to 4, wherein the processor sets a value of a new parameter that is required by the new control program to a default value.

6. The printer apparatus according to any one of claims 1 to 5, wherein the storage device further includes a fourth region in which back-up copies of the parameters are stored.

7. The printer apparatus according to claim 6, wherein the back-up copies of the parameters are stored in a compressed format.

8. A method of updating a control program for a printer apparatus, said method comprising:
loading a new control program into a first region of a volatile memory, which is different from a second region of the volatile memory into which the control program for the printer apparatus is loaded from a first region of a non-volatile storage device upon booting;
storing the new control program loaded into the first region of the volatile memory, in the first region of the non-volatile storage device;
updating values of parameters stored in a second region of the non-volatile storage device according to a flag that specifies one of a plurality of methods for updating the values of the parameters and is stored in a third region of the non-volatile storage device; and
upon subsequent booting, loading the new control program stored in the first region of the non-volatile memory into the second region of the volatile memory.

9. The method according to claim 8, wherein the values of the parameter stored in the second storage region are updated to default values if the flag has a first value.

10. The method according to any one of claims 8 or 9, wherein the values of the parameter stored in the second storage region are maintained if the flag has a second value.

11. The method according to any one of claims 8 to 10, wherein the values of the parameter stored in the second storage region are updated to custom values if the flag has a third value.

12. The method according to any one of claims 8 to 11, wherein a value of a new parameter that is required by the new control program is set to a default value.

13. The method according to any one of claims 8 to 12, wherein the method further comprises:
backing up the parameters to a fourth region of the non-volatile storage device prior to updating the values of parameters stored in the second region of the non-volatile storage device.

14. The method according to claim 13, wherein back-up copies of the parameters are stored in a compressed format.

15. A non-transitory computer readable program causing a processor of a printer apparatus to carry out the method according to any one of claims 8 to 14.
